# FASCICULE DE BREVET EUROPEEN

(11) **EP 0 387 134 B1**
(45) Date de publication et mention de la délivrance du brevet: **10.02.1993**
(21) Numéro de dépôt: 90400592.3
(22) Date de dépôt: 05.03.1990
(51) Int. Cl.: A01K 89/017

(54) **Moulinet de pêche électrique**
Elektrische Angelrolle
Electrical fishing reel

(30) Priorité: 10.03.1989 FR 8903174
(43) Date de publication de la demande: 12.09.1990
(73) Titulaire: Cittadini, Daniel, F-58130 Guérigny (FR)
(72) Inventeur: Cittadini, Daniel, F-58130 Guérigny (FR)
(74) Mandataire: Bonnetat, Christian

(56) Documents cités:
- DE-B- 1 153 437
- FR-A- 2 607 667
- US-A- 3 668 938
- US-A- 4 287 400

## Description

La présente invention concerne un moulinet de pêche électrique.

Par les brevets FR-A-1 518 684, FR-A-2 052 065 et FR-A-2 607 667 par exemple, on connaît déjà des moulinets de pêche électriques comportant un boîtier enfermant un organe commandé, tel qu'un interrupteur ou un moteur, la paroi dudit boîtier étant pourvue d'une ouverture pour le passage d'une liaison mécanique de commande, reliant ledit organe commandé interne à un organe de commande extérieur audit boîtier et porté par celui-ci.

Bien entendu, puisque l'utilisation d'un tel moulinet a lieu au voisinage immédiat de l'eau, il est indispensable que ladite liaison mécanique de commande soit étanche.

L'objet de la présente invention est précisément la réalisation d'une telle liaison mécanique, parfaitement étanche, plus spécialement pour le moulinet décrit dans FR-A-2 607 667.

A cette fin, selon l'invention, le moulinet de pêche électrique, comportant un moteur électrique disposé dans un boîtier et destiné à entraîner un tambour tournant, la transmission du mouvement de rotation entre l'arbre du moteur et ledit tambour étant obtenue par appui d'un galet extérieur au boîtier contre une jante dudit tambour, est caractérisé en ce que la pression dudit galet contre ladite jante est due à l'action d'une pièce de matière élastiquement déformable, qui assure de plus l'étanchéité au niveau de l'ouverture du boîtier traversé par ledit arbre du moteur.

Ainsi, puisque ladite pièce de matière élastiquement déformable assure simultanément les deux fonctions d'étanchéité et de pression d'entraînement du tambour, il est possible d'obtenir une transmission de structure simple et parfaitement étanche.

Ladite pièce élastiquement déformable peut présenter la forme d'une enveloppe épousant la forme du moteur qu'elle enveloppe et obstruer ladite ouverture par une de ses faces, ladite face étant traversée de façon étanche par ledit arbre du moteur et ladite enveloppe est précontrainte pour presser le galet contre la jante.

Dans le cas où ladite pièce de matière élastiquement déformable est logée au moins en partie dans ladite ouverture, il est avantageux qu'elle comporte des épaulements pressés élastiquement contre les faces opposées de la paroi dudit boîtier, à la périphérie de ladite ouverture.

De préférence, ladite pièce de matière élastiquement déformable est réalisée en un polyuréthane ou en une matière analogue, susceptible de fournir une bonne étanchéité tout en présentant de bonnes propriétés de déformation élastique.

Les figures du dessin annexé feront bien comprendre comment l'invention peut être réalisée. Sur ces figures, des références identiques désignent des éléments semblables.

La figure 1 est une vue en élévation d'un exemple de réalisation du moulinet selon l'invention, le couvercle du boîtier étant ôté afin de montrer l'intérieur de celui-ci, partiellement représenté.

Les figures 2 et 3 sont respectivement des coupes selon les lignes II-II et III-III de la figure 1, l'intérieur du boîtier étant représenté de façon partielle.

La figure 4 est une vue, avec arrachement partiel, selon la flèche IV de la figure 1, illustrant un interrupteur à coulisseau.

L'exemple du moulinet selon l'invention, schématiquement représenté sur les figures, comporte un boîtier 1, obturé de façon étanche par un couvercle 2, et un tambour 3 pouvant tourner autour d'un palier 4 solidaire dudit boîtier 1, du côté opposé au couvercle 2, ledit tambour 3 étant extérieur audit boîtier.

Un pied 5, solidaire du boîtier 1, permet la fixation du moulinet sur une canne à pêche.

A l'intérieur du boîtier 1 est prévu un moteur électrique 6, ainsi que des piles d'alimentation 7 pour ledit moteur. Un interrupteur 8, intérieur au boîtier 1, commande l'alimentation du moteur électrique 6 par les piles 7 sous le contrôle d'un levier rotatif 9 pouvant pivoter autour d'un axe 10 solidaire du boîtier. Le levier rotatif 9 comporte une saillie 11 susceptible de venir au contact d'un axe 12 traversant la paroi du boîtier 1 par une ouverture 13. Cette ouverture 13 est obturée par une bague 14 de polyuréthane, assurant l'étanchéité au niveau de l'ouverture 13, ladite bague étant elle-même traversée de façon étanche par ledit axe 12. Comme représenté, la bague comporte de préférence des épaulements venant s'appliquer sur les deux faces opposées de la paroi du boîtier 1, à la périphérie de l'ouverture 13.

On voit ainsi que lorsque le levier 9 tourne autour de l'axe 10, la saillie 11 du levier 9 arrive au contact de l'extrémité extérieure de l'axe 12 et celui-ci est basculé transversalement à sa longueur grâce à la déformation élastique transversale de ladite bague 14. L'extrémité intérieure dudit axe 12 peut donc agir sur l'organe mobile 15 de l'interrupteur 8, en se déplaçant de façon sensiblement orthogonale à sa longueur.

Par ailleurs, l'arbre 16 du moteur électrique 6 traverse le boîtier 1 par une fente 17. A son extrémité extérieure, il est pourvu d'un galet d'entraînement 18, susceptible de rouler sur une jante 19 du tambour 3.

Une enveloppe 20 de polyuréthane épouse le moteur 6 et obture la fente 17. L'arbre 16 du moteur 6 traverse ladite enveloppe de façon étanche, grâce à des lèvres 21. Le moteur 6 est rendu solidaire du boîtier 1 grâce à une bride 22 mettant sous précontrainte ladite enveloppe 20, de sorte que le galet 18 est pressé élastiquement contre la jante 19.

Ainsi, lorsque le levier 9 est tourné autour de l'axe 10, la saillie 11 fait basculer l'axe 12, à l'encontre de l'action de la bague élastique 14, de sorte que l'interrupteur 8 est actionné. Le moteur 6 est donc alimenté et le galet 18 entraîne le tambour 3 en rotation. Si le levier 9 est ramené en sens inverse, l'alimentation du moteur cesse dès que la bague 14, en reprenant sa forme initiale, ramène l'axe 12 en position non basculée.

On voit ainsi que, aussi bien la bague 14 que l'enveloppe 20, assurent, à la fois, une fonction d'étanchéité et une fonction d'élasticité, avec l'axe 12 et l'arbre 21, respectivement.

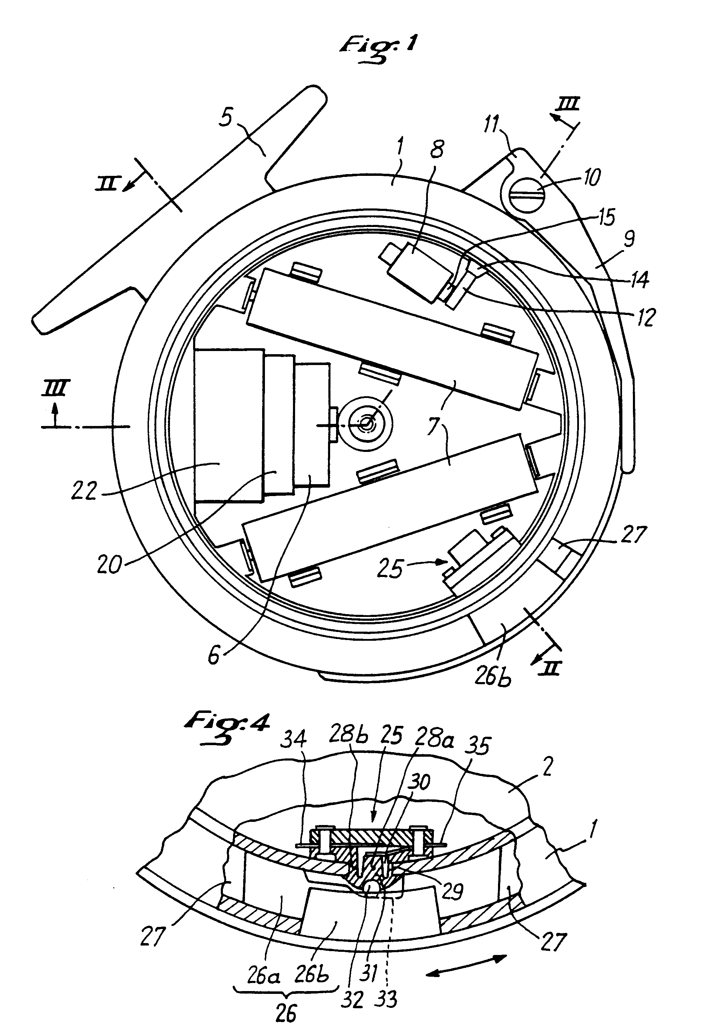

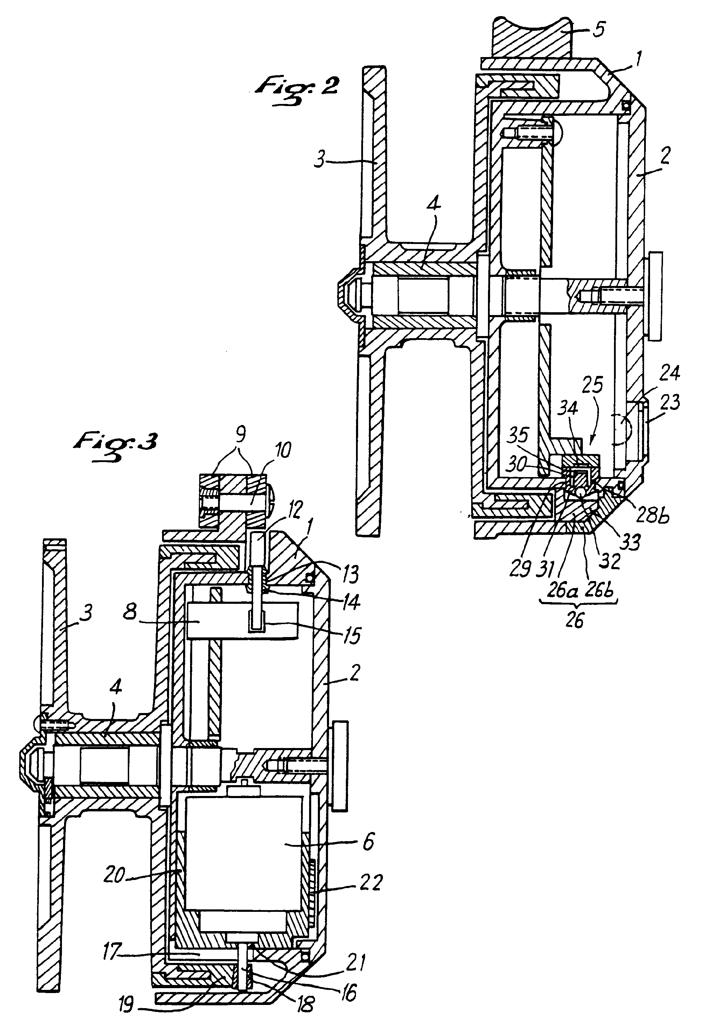

Par ailleurs, comme le montre la figure 2, le couvercle 2 du boîtier 1 comporte une fenêtre transparente 23, derrière laquelle est disposée une ampoule électrique 24 (schématiquement et partiellement représentée), susceptible d'être alimentée par les piles 7 par l'intermédiaire d'un interrupteur 25, pour servir de dispositif d'éclairage.

Comme cela est montré également sur la figure 4, l'interrupteur 25 est constitué par un coulisseau 26 (en deux pièces 26a et 26b), susceptible de se déplacer tangentiellement au boîtier 1, dans un logement périphérique 27 de celui-ci, ainsi que par un bloc 28 de matière élastiquement déformable, obturant de façon étanche une ouverture 29 de la paroi dudit boîtier. La partie centrale 28a dudit bloc 28 est séparée partiellement de la partie périphérique 28b de celui-ci par des fentes 30, assurant une plus grande mobilité à ladite partie centrale 28a. De plus, la partie centrale 28a du bloc 28 comporte une saillie 31 portant une bille ou analogue 32, en contact avec une rampe 33 du coulisseau 26.

Ainsi, la partie périphérique 28b du bloc 28 assure l'étanchéité au niveau de l'ouverture 29, tandis que la partie centrale 28a est suffisamment mobile pour assurer la fermeture du contact entre deux bornes 34 et 35, reliées aux piles 7, lorsqu'elle est repoussée par la rampe 33 du coulisseau 26, déplacé à cet effet (de la gauche vers la droite de la figure 4). L'ampoule 24 est donc alors allumée. Si le coulisseau 26 est ramené à sa position initiale (par mouvement de la droite vers la gauche de la figure 4)), l'élasticité du bloc 28 oblige la bille 32 à suivre la rampe 33 et les bornes 34 et 35 se séparent sous l'action de cette élasticité.

Dans ce cas, le bloc 28 assure, à la fois, l'étanchéité et la liaison mécanique entre l'intérieur et l'extérieur du boîtier 1.

Ici encore, des épaulements sont prévus sur le bloc 28 pour s'appuyer sur les faces opposées de la paroi du boîtier 1, à la périphérie de l'ouverture 29.

## Revendications

1. Moulinet de pêche électrique, comportant un moteur électrique (6), disposé dans un boîtier (1) et destiné à entraîner un tambour tournant (3), la transmission du mouvement de rotation entre l'arbre (21) du moteur et ledit tambour étant obtenue par appui d'un galet (18) extérieur au boîtier contre une jante (19) dudit tambour,
caractérisé en ce que la pression dudit galet (18) contre ladite jante (19) est due à l'action d'une pièce de matière élastiquement déformable (20), qui assure de plus l'étanchéité au niveau de l'ouverture (17) du boîtier traversé par ledit arbre (21) du moteur.

2. Moulinet selon la revendication 1,
caractérisé en ce que ladite pièce élastiquement déformable (20) présente la forme d'une enveloppe épousant la forme du moteur (6) et obstruant ladite ouverture (17) par une de ses faces, ladite face étant traversée de façon étanche par ledit arbre du moteur et en ce que ladite enveloppe est précontrainte pour presser le galet contre la jante.

3. Moulinet selon l'une quelconque des revendications 1 ou 2,
caractérisé en ce que ladite pièce de matière élastiquement déformable (20) comporte des épaulements pressés élastiquement contre les faces opposées de la paroi dudit boîtier, à la périphérie de ladite ouverture.

4. Moulinet selon l'une quelconque des revendications 1 à 3,
caractérisé en ce que ladite pièce de matière élastiquement déformable (20) est réalisée en un polyuréthane.

## Patentansprüche

1. Elektrische Angelrolle mit einem Elektromotor (6), der in einem Gehäuse (1) vorgesehen und zum Antrieb einer Drehtrommel (3) bestimmt ist, wobei die Übertragung der Drehbewegung zwischen der Motorwelle (21) und der Trommel durch die Auflage einer Reibrolle (18) außerhalb des Gehäuses gegen einen Radkranz (19) der Trommel erhalten wird, dadurch gekennzeichnet,
daß der Druck der Reibrolle (18) gegen den Radkranz (19) der Wirkung eines Teils aus elastisch deformierbarem Material (20) zukommt, das außerdem die Dichtheit des von der Motorwelle (21) durchsetzten Gehäuses auf der Höhe der Öffnung (17) gewährleistet.

2. Angelrolle nach Anspruch 1, dadurch gekennzeichnet,
daß das elastisch deformierbare Teil (20) die Form einer Hülle aufweist, die sich an die Form des Motors (6) anschmiegt und die Öffnung (17) mit einer ihrer Seiten verschließt, wobei diese Seite auf dichte Weise von der Motorwelle durchsetzt ist und dadurch, daß die Hülle vorgespannt ist, um die Reibrolle gegen den Radkranz zu drücken.

3. Angelrolle nach einem der Ansprüche 1 oder 2, dadurch gekennzeichnet,
daß das Teil aus elastisch deformierbarem Material (20) Schultern umfaßt, die am Umfang der Öffnung elastisch gegen die gegenüberliegenden Seiten der Gehäusewand gedrückt sind.

4. Angelrolle nach einem der Ansprüche 1 bis 3, dadurch gekennzeichnet,
daß das Teil aus elastisch deformierbarem Material (20) aus einem Polyurethan gefertigt ist.

## Claims

1. Electric fishing reel, comprising an electric motor (6), arranged in a casing (1) and intended to drive a rotating drum (3), the transmission of rotational movement between the shaft (21) of the motor and the said drum being obtained by a roller (18) outside the casing bearing against a rim (19) of the said drum , characterised in that the pressure of the said roller (18) against the said rim (19) is due to the action of a part of elastically deformable material (20), which in addition provides sealing in the region of the opening (17) of the casing traversed by the said shaft (21) of the motor.

2. Reel according to Claim 1, characterised in that the said elastically deformable part (20) has the shape of a Jacket matching the shape of the motor (6) and blocking the said opening (17) by one of its faces, the said face being traversed in a sealed manner by the said shaft of the motor and in that the said jacket is prestressed in order to press the roller against the rim.

3. Reel according to any one of Claims 1 or 2, characterised in that the said part of elastically deformable material (20) comprises shoulders elastically pressed against the opposite faces of the wall of the said casing, at the periphery of the said opening.

4. Reel according to any one of Claims 1 to 3, characterised in that the said part of elastically deformable material (20) is made from polyurethane.
